(19) **Europäisches Patentamt / European Patent Office / Office européen des brevets**

(11) **EP 1 519 204 B1**

(12) **EUROPÄISCHE PATENTSCHRIFT**

(45) Veröffentlichungstag und Bekanntmachung des Hinweises auf die Patenterteilung:
**24.03.2010 Patentblatt 2010/12**

(51) Int Cl.:
**G01S 13/90** *(2006.01)*

(21) Anmeldenummer: **04022028.7**

(22) Anmeldetag: **16.09.2004**

(54) **Multistatischer Radar für ein Kraftfahrzeug**

Multistatic radar for vehicle

Radar multistatique pour véhicule

(84) Benannte Vertragsstaaten:
**AT BE BG CH CY CZ DE DK EE ES FI FR GB GR HU IE IT LI LU MC NL PL PT RO SE SI SK TR**

(30) Priorität: **29.09.2003 DE 10345588**
**09.12.2003 DE 10357704**

(43) Veröffentlichungstag der Anmeldung:
**30.03.2005 Patentblatt 2005/13**

(73) Patentinhaber: **Volkswagen Aktiengesellschaft**
**38436 Wolfsburg (DE)**

(72) Erfinder:
• **Bartels, Arne**
**38448 Wolfsburg (DE)**
• **Meinecke, Marc-Michael**
**38524 Sassenburg (DE)**

(56) Entgegenhaltungen:
EP-A- 0 936 473        WO-A-01/26183
WO-A-01/59473        WO-A-02/31529
DE-A- 4 228 794        DE-A- 4 244 608
DE-A- 4 331 440        DE-A- 10 025 844
DE-A- 19 543 813        DE-A- 19 922 411
US-B1- 6 215 438

• SWART P J F ET AL: "COLLISION AVOIDANCE RADAR ABLE TO DIFFERENTIATE OBJECTS" 27TH EUROPEAN MICROWAVE CONFERENCE PROCEEDINGS. JERUSALEM, SEPT. 8 - 12, 1997, PROCEEDINGS OF THE EUROPEAN MICROWAVE CONFERENCE, JERUSALEM : ORTRA LTD, IL, Bd. VOL. 1 OF 2, 8. September 1997 (1997-09-08), Seiten 45-50, XP001072423
• BENLARBI-DELAI A ET AL: "MICROWAVE SHORT-RANGE INTERFEROMETRIC RADAR" INTERNATIONAL CONFERENCE ON MODELING AND SIMULATION OF MICROSYSTEMS, SEMICONDUCTORS, SENSORS AND ACTUATORS, PROCEEDINGS OF MODELLING AND SIMULATION OF MICROSYSTEMS, SEMICONDUCTORS, SENSORS AND ACTUATORS, XX, XX, 6. April 1998 (1998-04-06), Seiten 637-642, XP001006127
• STEENSTRA H T ET AL: "3D VELOCITY MEASUREMENTS BY MEANS OF HIGH RESOLUTION SPARSE ARRAY RADAR" 30TH EUROPEAN MICROWAVE CONFERENCE PROCEEDINGS. PARIS, OCT. 3 - 5, 2000, PROCEEDINGS OF THE EUROPEAN MICROWAVE CONFERENCE, LONDON : CMP, GB, Bd. VOL. 3 OF 3 CONF. 30, 5. Oktober 2000 (2000-10-05), Seiten 100-103, XP001060986 ISBN: 0-86213-212-6

EP 1 519 204 B1

**Beschreibung**

Die Erfindung betrifft eine Messeinrichtung, insbesondere eine Messeinrichtung für ein Kraftfahrzeug, zum Messen eines Winkels zwischen einer Messeinrichtung und einem Objekt.

Eine derartige als Radargerät ausgestaltete Messeinrichtung ist aus der DE 195 43 813 A1 bekannt. So offenbart die DE 195 43 813 A1 ein dreistrahliges Kraftfahrzeug-Radarsystem, wobei unter einem Winkel eine Wellenfront auf eine Linse einer Linsenantenne trifft. In der Brennebene dieser Linse, angegeben durch den Abstand, sind drei Empfangselemente, jeweils mit einem seitlichen Abstand zueinander, für den Empfang von Radarsignalen angeordnet. In drei vorgesehenen Mischern wird in die von einem Oszillator jeweils zugeführte Frequenz das in den Empfangselementen erzeugte Hochfrequenzsignal gemischt. In einem Detektor werden aus den Mischsignalen, in denen die Phaseninformation enthalten ist, Zielobjekte detektiert. Mittels eines daran angeschlossenen Phasenkomparators wird die Phasendifferenz und daraus anschließend in einem Rechner der Winkel zum Zielobjekt ermittelt. Der Wert dieses Winkels wird am Ausgang des Rechners über einen geeigneten Ausgabekanal weiterer Stufen des Systems zugeführt.

Die WO01/26183 offenbart einen mehrstrahligen Radarsensor mit wenigstens zwei Sende- und Empfangspatches auf einem Träger mit zugeordneten Polyrods und/oder mit einer dielektrischen Linse, wobei der Radarsensor monostatisch aufgebaut und derart ausgebildet ist, dass die Sende- oder Empfangsstrahlen bezüglich einer Mittelebene des Radarsensors asymmetrische Strahlengänge aufweisen.

Der Einsatz eines Radargerätes im Automobilbereich ist zudem aus der Veröffentlichung "Automotive 24GHz Short Range Radar(SRR) Sensors with Smart Antennas" von M. Schneider et al, Proceedings des German Radar Symposium DRS 2002, Seiten 175 bis 179, aus der Dissertation "Radarsysteme zur automatischen Abstandsregelung in Automobilen" von R. Mende, Technische Universität Carolo-Wilhelmina zu Braunschweig, 1999, sowie aus der DE 100 50 278 A1, der DE 199 22 411 A1, der DE 42 44 608 C2 und der DE 100 25 844 A1 bekannt.

So offenbart die DE 100 50 278 A1 die Bestimmung eines Abstandes und einer Relativgeschwindigkeit wenigstens eines entfernten Objekts von einem Beobachtungspunkt mit Hilfe von vom Beobachtungspunkt ausgesandten elektromagnetischen Signalen in Form von abwechselnd ausgesandten Signalabschnitten einer ersten Frequenz und einer zweiten Frequenz, die nach einer Reflexion an dem Objekt empfangen und ausgewertet werden, wobei die Signalabschnitte der beiden Frequenzen während eines Messintervalls um jeweils einen Frequenzschritt verschoben ausgesandt werden.

Die DE 199 22 411 A1 offenbart ein CW-Radarverfahren (Continuous Wave Radarverfahren bzw. Dauerstrichradarverfahren) zur Messung von Abständen und Relativgeschwindigkeiten zwischen einem Fahrzeug und einem oder mehreren Hindernissen, bei denen ein Sendesignal aus mindestens vier aufeinander folgenden Blöcken mit jeweils unterschiedlichen Steigungen besteht. In einem Entfernungs-Relativgeschwindigkeits-Diagramm werden zunächst die Schnittpunkte aller Geraden aus zwei Blöcken von allen gefundenen Frequenzpositionen berechnet. Zur Validierung dieser Schnittpunkte werden diese dahingehend überprüft, ob im Fourierspektrum eines dritten Blocks ein Peak an einer Frequenzposition existiert, deren zugeordnete Gerade im Entfernungs-Relativgeschwindigkeits-Diagramm einen Umgebungsbereich des Schnittpunktes schneidet. Die derart validierten Schnittpunkte werden einer zweiten Bedingung unterworfen, ob im Fourierspektrum eines vierten Blocks ein Peak an einer Frequenzposition existiert, deren zugeordnete Gerade im Entfernungs-Relativgeschwindigkeits-Diagramm einen Umgebungsbereich des Schnittpunktes schneidet. Die Schnittpunkte werden dann als gültig betrachtet, wenn sie beide Bedingungen erfüllen.

Die DE 42 44 608 C2 offenbart ein Radarverfahren zur Messung von Abständen und Relativgeschwindigkeiten zwischen einem Fahrzeug und vor diesem befindlichen Hindernissen, mit Aussendung kontinuierlicher Sendesignale, während des Aussendens der kontinuierlichen Sendesignale gleichzeitiges Empfangen an den Hindernissen reflektierter Signale, Mischen der reflektierten Signale mit den kontinuierlichen Sendesignalen zur Gewinnung von Inphase- und Quadratur-Signalen und Verarbeitung dieser Signale zu Ausgangssignalen für die Abstände und Relativgeschwindigkeiten der Hindernisse, wobei die kontinuierlichen Sendesignale in frequenzkonstante Stufen zeitlich konstanter Länge ohne zeitlichen Abstand zueinander zerlegt sind und zu jeder frequenzkonstanten Stufe des reflektierten empfangenen Signals ein komplexer Abtastwert erfasst und mit dem Sendesignal der gleichen frequenzkonstanten Stufe gemischt wird.

Die DE 100 25 844 A1 offenbart eine zur Emission eines pulsförmigen Sendesignals dienende Sendeeinheit, die mit einem ersten Ansteuersignal getaktet angesteuert wird, und eine zur Detektion des hieraus resultierenden Reflexionssignals dienende Empfangseinheit, die mit einem zweiten Ansteuersignal getaktet angesteuert wird, um das Reflexionssignal zu bestimmten Abtastzeitpunkten abzutasten. Das zweite Ansteuersignal wird gegenüber dem ersten Ansteuersignal derart phasenverschoben, dass die Entfernungsabweichung zwischen der aufgrund der Laufzeitmessung bestimmten Entfernung zum Zielobjekt und der tatsächlichen Entfernung zum Zielobjekt minimal wird.

Zudem ist aus der DE 43 31 440 A1 bekannt, für Radargeräte I/Q-Signalpaare für die Signalauswertung zu bilden, wobei zwischen einer Radarantenne und einem Radarfrontend ein Phasenschieber geschaltet ist, wobei eine Auswerteschaltung eingangsseitig zwei Signalkanäle aufweist, wobei das Radarfrontend über einen Kanalumschalter mit jeweils einem der beiden Signalkanäle verbindbar ist, wobei der Phasenschieber und der Kanalumschalter synchron getaktet sind, und wobei der Phasenschieber mit jedem Takt die Phase zwischen 0° und 45° umschaltet.

**EP 1 519 204 B1**

Aus der DE 689 13 423 T2 ist ein Doppler-Radargerät für ein Fahrzeug zum Anzeigen eines Abstands zwischen dem Fahrzeug und einem Hindernis bekannt.

Dokument XP0010724423 beschreibt eine Messeinrichtung für ein Kraftfahrzeug zum Messen eines Winkels zwischen einer Strahlrichtung der Messeinrichtung und einem Objekt nach dem Oberbegriff des Anspruchs 1. Insbesondere wird in D1 eine multistatische Radareinrichtung beschrieben, welche eine Sendeantenne und mehrere räumlich voneinander getrennte Empfangsantennen umfasst, wobei Einphasenabmischungen des Sende- und der Empfangssignale zur Bestimmung des Winkels durchgeführt wird.

Dokument XP001060986 beschreibt ebenfalls ein multistatisches Radar zur Bestimmung eines dreidimensionalen Geschwindigkeitsvektors eines Objekts zur Kollisionsvermeidung bei Kraftfahrzeugen.

Dokument US-B-6 215 4381 schließlich beschreibt ein Radarsystem für ein Kraftfahrzeug zur Bestimmung von Objekte in verschiedenen Raumgebieten.

Es ist Aufgabe der Erfindung, die Sicherheit beim Betrieb eines Kraftfahrzeugs zu verbessern.

Vorgenannte Aufgabe wird durch eine Messeinrichtung, insbesondere eine Messeinrichtung für ein Kraftfahrzeug, zum Messen eines Winkels zwischen einer Strahlrichtung der Messeinrichtung und einem Objekt gelöst, wobei die Messeinrichtung

- eine Abstrahlvorrichtung zum Abstrahlen eines Sendesignals,
- eine erste Empfangseinrichtung zum Empfang eines von dem Objekt reflektierten Reflexionssignals des abgestrahlten Sendesignals,
- zumindest eine zweite Empfangseinrichtung zum Empfang des von dem Objekt reflektierten Reflexionssignals des abgestrahlten Sendesignals,
- zumindest einen ersten Mischer zum Mischen des Sendesignals mit dem mittels der ersten Empfangseinrichtung empfangenen Reflexionssignals und
- zumindest einen zweiten Mischer zum Mischen des Sendesignals mit dem mittels der zweiten Empfangseinrichtung empfangenen Reflexionssignals
  aufweist, wobei das Sendesignal (s(t))
- zumindest eine erste Signalabschnittsfolge mit zumindest zwei zeitlich alternierenden Signalabschnitten, die sich in Ihrer Frequenz um eine Differenzfrequenz unterscheiden, und
- zumindest eine zweite Signalabschnittsfolge mit zumindest zwei zeitlich alternierenden Signalabschnitten, die sich in Ihrer Frequenz um eine Differenzfrequenz unterscheiden umfasst,

wobei die Differenzfrequenz der ersten Signalabschnittsfolge von der Differenzfrequenz der zweiten Signalabschnittsfolge verschieden ist.

Vorzugsweise ist die Differenzfrequenz der ersten Signalabschnittsfolge des Sendesignals von der Differenzfrequenz der zweiten Signalabschnittsfolge des Sendesignals um mindestens 5%, vorteilhafterweise um mindestens 10%, verschieden.

Strahlrichtung einer Messeinrichtung in Sinne der Erfindung ist insbesondere eine Hauptstrahlrichtung. Strahlrichtung einer Messeinrichtung in Sinne der Erfindung ist insbesondere eine Richtung die orthogonal zu einer Ebene durch die erste und die zweite Empfangseinrichtung ist. Senden eines Sendesignals in die Strahlrichtung in Sinne der Erfindung kann insbesondere eine Strahlform einer Keule umfassen, wobei insbesondere vorgesehen ist, dass ein ausreichender Teil der Sendeleistung auf das Objekt trifft.

In vorteilhafter Ausgestaltung der Erfindung ist mittels des ersten Mischers ein erstes Mischsignal bildbar. In weiterhin vorteilhafter Ausgestaltung der Erfindung ist (zudem) mittels des zweiten Mischers ein zweites Mischsignal bildbar.

In weiterhin vorteilhafter Ausgestaltung der Erfindung weist die Messeinrichtung eine Auswertevorrichtung zur Bestimmung des Winkels zwischen der Strahlrichtung der Messeinrichtung und dem Objekt in Abhängigkeit des ersten und des zweiten Mischsignal auf.

In weiterhin vorteilhafter Ausgestaltung der Erfindung ist mittels der Auswertevorrichtung der Winkel zwischen der Strahlrichtung der Messeinrichtung und dem Objekt in Abhängigkeit der Differenz der Phase des ersten Mischsignals und der Phase des zweiten Mischsignals bestimmbar.

In weiterhin vorteilhafter Ausgestaltung der Erfindung ist mittels der Messeinrichtung (zudem) ein Abstand zwischen der Messeinrichtung und dem Objekt und/oder eine Geschwindigkeitsdifferenz zwischen der Messeinrichtung und dem Objekt messbar.

In weiterhin vorteilhafter Ausgestaltung der Erfindung weist die Messeinrichtung nicht mehr als eine Abstrahlvorrichtung auf. In weiterhin vorteilhafter Ausgestaltung der Erfindung weist die Messeinrichtung nicht mehr als zwei Empfangseinrichtungen auf.

In weiterhin vorteilhafter Ausgestaltung der Erfindung sind die Abstrahlvorrichtung und die Empfangseinrichtungen in einem Gehäuse integriert.

In weiterhin vorteilhafter Ausgestaltung der Erfindung weist die Messeinrichtung drei, insbesondere nicht mehr als drei, Empfangseinrichtungen auf.

In weiterhin vorteilhafter Ausgestaltung der Erfindung ist mittels der Messeinrichtung ein erster Winkel zwischen der Strahlrichtung der Messeinrichtung und dem Objekt in einer ersten Ebene und ein zweiter Winkel zwischen der Strahlrichtung der Messeinrichtung und dem Objekt in einer zweiten Ebene messbar, wobei die erste Ebene und die zweite Ebene vorteilhafterweise im wesentlichen orthogonal sind.

In weiterhin vorteilhafter Ausgestaltung der Erfindung sind die Abstrohlvorrichtung und die Empfangseinrichtung je eine Antenne. Die Abstrahlvorrichtung und eine Empfangseinrichtung können jedoch auch mittels einer gemeinsamen Antenne implementiert werden.

In weiterer Ausgestaltung der Erfindung ist die Abstrahlvorrichtung ein optisches Element, insbesondere ein Laser. Die Empfangseinrichtung ist dabei in weiterer Ausgestaltung der Erfindung ein lichtempfindliches Element, insbesondere eine Photodiode.

In weiterhin vorteilhafter Ausgestaltung der Erfindung wird die Messeinrichtung in einem Fahrassistenzsystem eingesetzt, wobei das Fahrassistenzsystem einen Bewerter zur Erzeugung einer Warninformation in Abhängigkeit des Winkels zwischen der Strahlrichtung der Messeinrichtung und dem Objekt sowie in Abhängigkeit des Abstands zwischen der Messeinrichtung und dem Objekt aufweist.

In weiterhin vorteilhafter Ausgestaltung der Erfindung ist die Warninformation mittels des Bewerters zudem in Abhängigkeit der Geschwindigkeitsdifferenz zwischen der Messeinrichtung und dem Objekt erzeugbar.

In weiterhin vorteilhafter Ausgestaltung der Erfindung ist die Warninformation mittels des Bewerters zudem in Abhängigkeit eines Zustandes eines Fahrrichtungsanzeigers erzeugbar.

In weiterhin vorteilhafter Ausgestaltung der Erfindung west das Fahrassistenzsystem eine Ausgabevorrichtung zur optischen, akustischen und/oder haptischen Ausgabe eines Warnsignals in Abhängigkeit der Warninformation auf.

Vorgenannte Aufgabe wird zudem durch eine Radareinrichtung, insbesondere eine Radareinrichtung für ein Kraftfahrzeug, zum Messen eines Winkels zwischen einer Strahlrichtung der Radareinrichtung und einem Objekt in Verbindung mit vorgenannten vorteilhaften Ausgestaltungen gelöst, wobei die Radareinrichtung

- eine Sendeantenne zum Abstrahlen eines Sendesignals, insbesondere in die Strahlrichtung,
- eine erste Empfangsantenne zum Empfang eines von dem Objekt reflektierten Reflexionssignals des abgestrahlten Sendesignals,
- zumindest eine zweite Empfangsantenne zum Empfang des von dem Objekt reflektierten Reflexionssignals des abgestrahlten Sendesignals,
- zumindest einen ersten Mischer zum Mischen des Sendesignals mit dem mittels der ersten Empfangsantenne empfangenen Reflexionssignals und
- zumindest einen zweiten Mischer zum Mischen des Sendesignals mit dem mittels der zweiten Empfangsantenne empfangenen Reflexionssignals
  sowie eine Auswertevorrichtung
- zur Ermittlung des Winkels zwischen der Strahlrichtung und einem Objekt und
- zur Ermittlung eines Abstands zwischen der Radareinrichtung und dem Objekt sowie
- insbesondere zur Ermittlung einer Geschwindigkeitsdifferenz zwischen der Radareinrichtung und dem Objekt

aufweist.

Vorgenannte Aufgabe wird zudem durch ein Fahrassistenzsystem für ein Kraftfahrzeug in Verbindung mit vorgenannten vorteilhaften Ausgestaltungen gelöst, wobei das Fahrassistenzsystem eine Radareinrichtung

- zur Ermittlung eines Winkels zwischen einer Strahlrichtung der Radareinrichtung und einem Objekt und
- zur Ermittlung eines Abstands zwischen der Radareinrichtung und dem Objekt sowie
- insbesondere zur Ermittlung einer Geschwindigkeitsdifferenz zwischen der Radareinrichtung und dem Objekt aufweist und wobei mittels des Fahrassistenzsystems ein optisches, akustisches und/oder haptisches Warnsignal in Abhängigkeit
- des Winkels zwischen der Strahlrichtung und dem Objekt und
- des Abstands zwischen der Radareinrichtung und dem Objekt sowie
- insbesondere der Geschwindigkeitsdifferenz zwischen der Radareinrichtung und dem Objekt

erzeugbar ist.

Vorgenannte Aufgabe wird zudem durch ein Verfahren zum Messen eines Winkels zwischen einer Strahlrichtung einer Messeinrichtung für ein Kraftfahrzeug und einem Objekt gelöst,

- wobei ein Sendesignal, insbesondere in die Strahlrichtung, abgestrahlt wird,

- wobei mittels einer ersten Empfangseinrichtung ein von dem Objekt reflektiertes Reflexionssignal des abgestrahlten Sendesignals empfangen wird,
- wobei mittels einer zweiten Empfangseinrichtung das von dem Objekt reflektierte Reflexionssignal des abgestrahlten Sendesignals empfangen wird,
- wobei das Sendesignal mit dem mittels der ersten Empfangseinrichtung empfangenen Reflexionssignal zu einem ersten Mischsignal gemischt wird, und
- wobei das Sendesignal mit dem mittels der zweiten Empfangseinrichtung empfangenen Reflexionssignal zu einem zweiten Mischsignal gemischt wird und wobei das Sendesignal $(s(t))$
- zumindest eine erste Signalabschnittsfolge mit zumindest zwei zeitlich alternierenden Signalabschnitten, die sich in Ihrer Frequenz um eine Differenzfrequenz unterscheiden, und
- zumindest eine zweite Signalabschnittsfolge mit zumindest zwei zeitlich alternierenden Signalabschnitten, die sich in Ihrer Frequenz um eine Differenzfrequenz unterscheiden umfasst,
 wobei die Differenzfrequenz der ersten Signalabschnittsfolge von der Differenzfrequenz der zweiten Signalabschnittsfolge verschieden ist.

Vorzugsweise ist die Differenzfrequenz der ersten Signalabschnittsfolge des Sendesignals von der Differenzfrequenz der zweiten Signalabschnittsfolge des Sendesignals um mindestens 5%, vorteilhafterweise um mindestens 10%, verschieden.

In vorteilhafter Ausgestaltung der Erfindung wird der Winkel zwischen der Strahlrichtung der Messeinrichtung und dem Objekt in Abhängigkeit des ersten Mischsignals und des zweiten Mischsignals bestimmt.

In weiterhin vorteilhafter Ausgestaltung der Erfindung wird der Winkel zwischen der Strahlrichtung der Messeinrichtung und dem Objekt in Abhängigkeit der Differenz der Phase des ersten Mischsignals und der Phase des zweiten Mischsignals bestimmt.

In weiterhin vorteilhafter Ausgestaltung der Erfindung wird ein Abstand zwischen der Messeinrichtung und dem Objekt in Abhängigkeit des ersten Mischsignals und/oder des zweiten Mischsignals bestimmt.

In weiterhin vorteilhafter Ausgestaltung der Erfindung wird eine Geschwindigkeitsdifferenz zwischen der Messeinrichtung und dem Objekt in Abhängigkeit des ersten Mischsignals und/oder des zweiten Mischsignals bestimmt.

In weiterhin vorteilhafter Ausgestaltung der Erfindung wird ein optisches, akustisches und/oder haptisches Warnsignal in Abhängigkeit des Winkels zwischen der Strahlrichtung der Messeinrichtung und dem Objekt sowie in Abhängigkeit des Abstands zwischen der Messeinrichtung und dem Objekt erzeugt.

In weiterhin vorteilhafter Ausgestaltung der Erfindung wird das optische, akustische und/oder haptische Warnsignal zudem in Abhängigkeit der Geschwindigkeitsdifferenz zwischen der Messeinrichtung und dem Objekt erzeugt.

In weiterhin vorteilhafter Ausgestaltung der Erfindung wird das optische, akustische und/oder haptische Warnsignal zudem in Abhängigkeit eines Zustandes eines Fahrrichtungsanzeigers erzeugt.

Kraftfahrzeug im Sinne der Erfindung ist insbesondere ein individuell im Straßenverkehr benutzbares Landfahrzeug. Kraftfahrzeuge im Sinne der Erfindung sind insbesondere nicht auf Landfahrzeuge mit Verbrennungsmotor beschränkt.

Weitere Vorteile und Einzelheiten ergeben sich aus der nachfolgenden Beschreibung von Ausführungsbeispielen. Dabei zeigen:

Fig. 1    eine Vorderansicht eines Kraftfahrzeugs,
Fig. 2    eine Seitenansicht eines Kraftfahrzeugs,
Fig. 3    eine Draufsicht auf ein Kraftfahrzeug,
Fig. 4    ein Ausführungsbeispiel für eine Radareinrichtung in schematischer Darstellung,
Fig. 5    ein Ausführungsbeispiel für ein Frequenz-Zeit-Diagramm,
Fig. 6    ein Ausführungsbeispiel für eine Anordnung von Antennen,
Fig. 7    ein weiteres Ausführungsbeispiel für eine Anordnung von Antennen,
Fig. 8    ein weiteres Ausführungsbeispiel für eine Radareinrichtung in schematischer Darstellung und
Fig. 9    ein Ausführungsbeispiel für ein Fahrassistenzsystem.

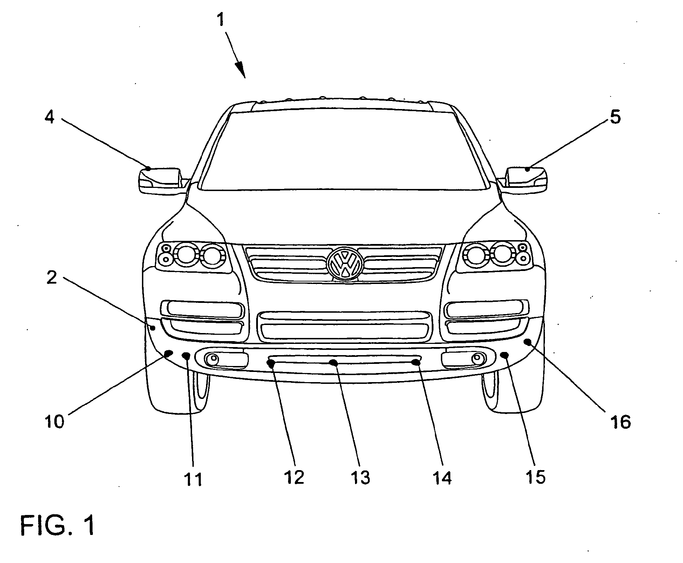

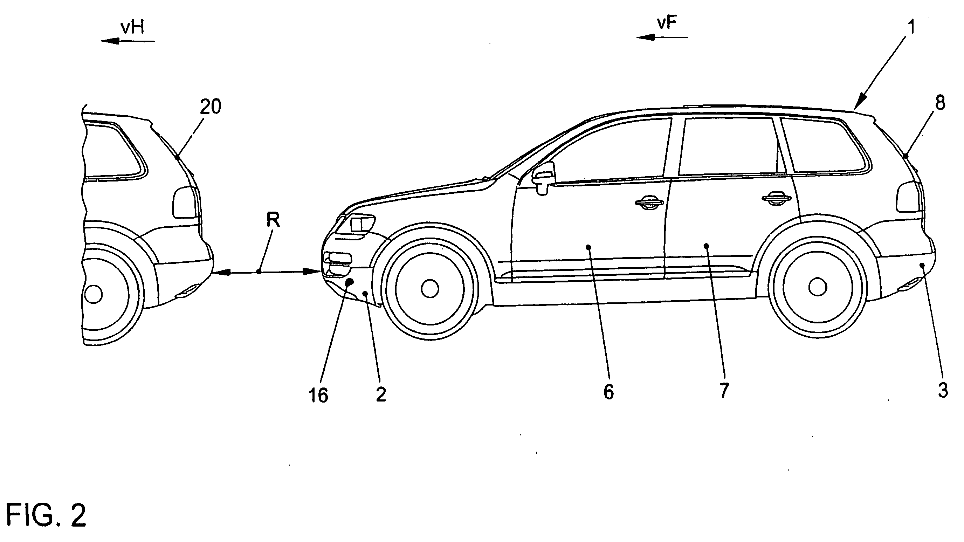

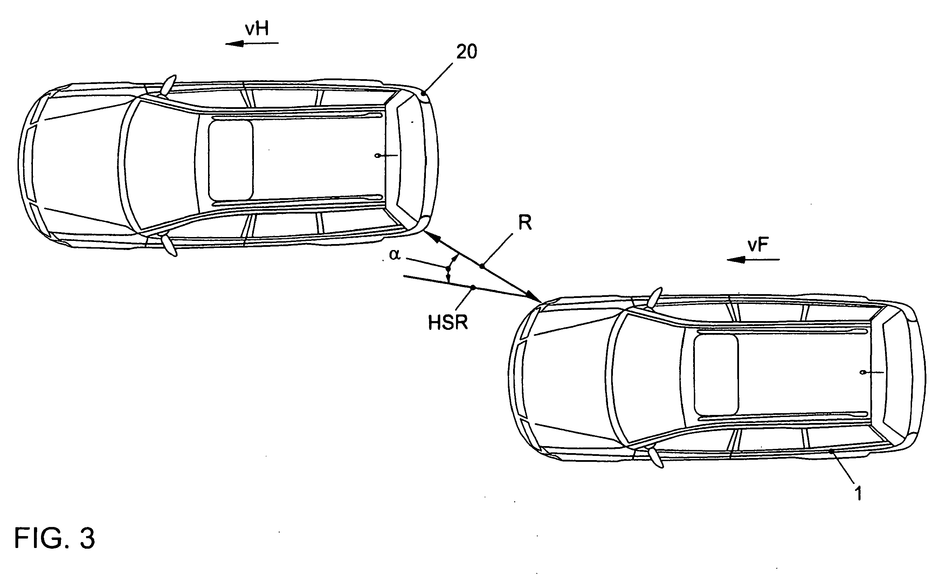

Fig. 1, Fig. 2 und Fig. 3 zeigen ein Kraftfahrzeug 1 in beispielhafter Ausgestaltung. Fig. 1 zeigt dabei eine Vorderansicht des Kraftfahrzeugs 1, Fig. 2 zeigt eine Seitenansicht des Kraftfahrzeugs 1, und Fig. 3 zeigt eine Draufsicht auf das Kraftfahrzeug. Das Kraftfahrzeug 1 weist einen vorderen Stoßfänger 2 und einen hinteren Stoßfänger 3 auf. Der vordere Stoßfänger 2 weist in beispielhafter Ausgestaltung Winkel-, Abstands- und/oder Geschwindigkeitssensoren 10, 11, 12, 13, 14, 15, 16 zum Messen eines Winkels zwischen einer Strahlrichtung eines Winkel-, Abstands- und/oder Geschwindigkeitssensors 10, 11, 12, 13, 14, 15, 16 und einem Objekt bzw. Hindernis 20, wie etwa einem anderen Kraftfahrzeug, und optional des Abstandes R zwischen dem Kraftfahrzeug 1 und dem Objekt bzw. Hindernis 20 und/oder zum Messen einer Geschwindigkeitsdifferenz v zwischen dem Kraftfahrzeug 1 und dem Objekt bzw. Hindernis 20 auf, wobei die Geschwindigkeitsdifferenz v die Differenz der Geschwindigkeit vH des Hindernisses 20 und der Geschwindigkeit vF des Kraftfahrzeugs 1 ist.

Es können je nach Anwendung der Winkel-, Abstands- und/oder Geschwindigkeitssensoren 10, 11, 12, 13, 14, 15, 16 mehr oder weniger Winkel-, Abstands- und/oder Geschwindigkeitssensoren am Stoßfänger 2 angeordnet sein. Es können alternativ oder zusätzlich auch Winkel-, Abstands- und/oder Geschwindigkeitssensoren an dem hinteren Stoßfänger 3, an Seitenspiegeln 4, 5, an Seitentüren 6, 7 und/oder an einer Heckklappe 8 angeordnet sein. Die Winkel-, Abstands- und/oder Geschwindigkeitssensoren können in verschiedene Richtungen und/oder in verschiedene Höhen ausgerichtet sein.

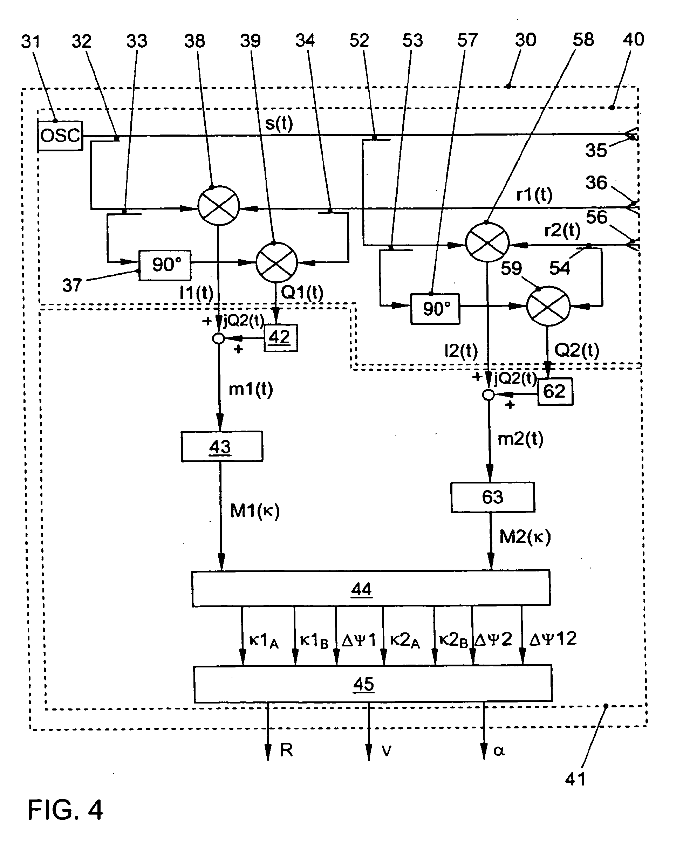

Fig. 4 zeigt eine Radareinrichtung 30, die z.B. als Winkel-, Abstands- und/oder Geschwindigkeitssensor 10, 11, 12, 13, 14, 15, 16 verwendbar ist. Die Radareinrichtung 30 weist einen Radarsensor 40 und eine Auswertevorrichtung 41 auf. Die Radareinrichtung 30 weist einen Oszillator bzw. einen Signalgenerator 31 zur Erzeugung eines Sendesignals s(t), eine Sendeantenne 35 zur Abstrahlung des Sendesignals s(t) und eine Empfangsantenne 36 zum Empfang eines von einem Objekt wie dem Hindernis 20 reflektierten Reflexionssignals r1 (t) des abgestrahlten Sendesignals s(t) auf. t bezeichnet dabei die Zeit.

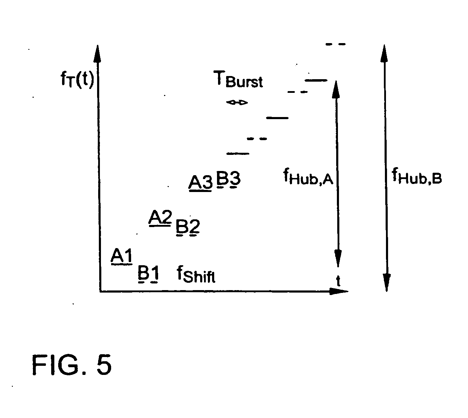

Das mittels des Signalgenerators 31 erzeugte Sendesignal s(t) umfasst in beispielhafter Ausgestaltung zumindest zwei Signalabschnittsfolgen, eine erste Signalabschnittsfolge und eine zweite Signalabschnittsfolge, mit zumindest je zwei zeitlich alternierenden Signalabschnitten, wobei sich die zumindest zwei Signalabschnitte einer Signalabschnittsfolge in ihrer Frequenz um je eine Differenzfrequenz unterscheiden, und wobei die Differenzfrequenz der ersten Signalabschnittsfolge von der Differenzfrequenz der zweiten Signalabschnittsfolge, insbesondere um mindestens 5%, vorteilhafterweise um mindestens 10%, verschieden ist. Ein Ausführungsbeispiel eines derartigen Sendesignals ist in Fig. 5 in einem Frequenz-Zeit-Diagramm dargestellt.

Dabei bezeichnen A1, A2, A3, ... die Signalabschnitte einer ersten Signalabschnittsfolge A(t) und B1, B2, B3, ... die Signalabschnitte einer zweiten Signalabschnittsfolge B(t). Derartige Signalabschnitte werden auch als Chirps bezeichnet. Im vorliegenden Ausführungsbeispiel sind die Zeitdauern $T_{Burst}$ für die Signalabschnitte A1, A2, A3, ... und B1, B2, B3, ... gleich lang. Die Zeitdauern $T_{Burst}$ der Signalabschnitte A1, A2, A3, ... sind in Fig. 4 durch eine durchgezogene Linie und die Zeitdauern $T_{Burst}$ der Signalabschnitte B1, B2, B3, ... durch eine unterbrochene Linie dargestellt.

Die Frequenz innerhalb eines Signalabschnitts A1, A2, A3, ... bzw. B1, B2, B3, ... kann eine konstante Trägerfrequenz $f_T(t)$ sein, sie kann aber auch eine mit einer Modulationsfrequenz modulierte konstante Trägerfrequenz $f_T(t)$ sein.

Die einzelnen Signalabschnitte A1, A2, A3, ... der ersten Signalabschnittsfolge A(t) unterscheiden sich in ihrer Frequenz bzw. ihrer Trägerfrequenz $f_T(t)$ um je eine Differenzfrequenz $f_{Hub,A}/(N-1)$, wobei $f_{Hub,A}$ die Differenz zwischen der Trägerfrequenz des ersten Signalabschnitts A1 der ersten Signalabschnittsfolge A(t) und der Trägerfrequenz des N-ten Signalabschnitts der ersten Signalabschnittsfolge A(t) und N die Anzahl der Signalabschnitte A1, A2, A3, ... der ersten Signalabschnittsfolge A(t) ist. Die einzelnen Signalabschnitte B1, B2, B3, ... der ersten Signalabschnittsfolge B(t) unterscheiden sich in ihrer Frequenz bzw. ihrer Trägerfrequenz $f_T(t)$ um je eine Differenzfrequenz $f_{Hub,B}/(N-1)$, wobei $f_{Hub,B}$ die Differenz zwischen der Trägerfrequenz des ersten Signalabschnitts B1 der zweiten Signalabschnittsfolge B(t) und der Trägerfrequenz des N-ten Signalabschnitts der zweiten Signalabschnittsfolge B(t) und N ebenfalls die Anzahl der Signalabschnitte B1, B2, B3, ... der ersten Signalabschnittsfolge B(t) ist. Es hat sich überraschenderweise als besonders vorteilhaft erwiesen, die Differenzfrequenz $f_{Hub,A}/(N-1)$ und der ersten Signalabschnittsfolge A(t), insbesondere um mindestens 5%, vorteilhafterweise um mindestens 10%, verschieden von der Differenzfrequenz $f_{Hub,B}/(N-1)$ der zweiten Signalabschnittsfolge B(t) zu wählen.

Es kann zudem ein Frequenzversatz $f_{Shift}$ zwischen dem Signalabschnitt A1 der ersten Signalabschnittsfolge A(t) und dem Signalabschnitt B1 der zweiten Signalabschnittsfolge B(t) vorgesehen werden.

Entsprechend ergibt sich die erste Signalabschnittsfolge A(t) zu

$$A(t) = \sum_{n=0}^{N-1} \cos\left( 2\pi \cdot \left( f_{TA1} + \frac{n}{N-1} \cdot f_{Hub,A} \right) \cdot t \right) \cdot \operatorname{rect}\left( \frac{t}{T_{Burst}} - \frac{1}{2} - 2n \right)$$

und die zweite Signalabschnittsfolge B(t) zu

$$B(t) = \sum_{n=0}^{N-1} \cos\left( 2\pi \cdot \left( f_{TA1} + f_{Shift} + \frac{n}{N-1} \cdot f_{Hub,B} \right) \cdot t \right) \cdot \operatorname{rect}\left( \frac{t}{T_{Burst}} - \frac{1}{2} - (2n+1) \right)$$

wobei $f_{TA1}$ die Trägerfrequenz des Signalabschnitts A1 und rect die Rechteckfunktion bezeichnet.

Das Sendesignal s(t) ergibt sich damit zu

$$s(t) = A(t) + B(t)$$

Es sind selbstverständlich auch anderer Sensesignale möglich. U.a. kann vorgesehen sein, ein Sendesignal gemäß der DE 100 50 278 A1 zu erezugen.

Das Sendesignal s(t) wird mittels einer galvanischen Trennung 32 einem Mischer 38 zum Mischen des Sendesignals s(t) und des Reflexionssignals r1 (t) zugeleitet. Der Mischer 38 gibt ein Inphase-Signal I1(t) aus.

Das Sendesignal s(t) wird zudem mittels einer weiteren galvanischen Trennung 33 einem Phasenschieber 37 zugeleitet, mittels dessen die Phase des Sendesignals s(t) bezogen auf die Trägerfrequenz um 90° also $\pi/2$ verschoben wird. Das phasenverschobene Sendesignal wird einem Mischer 39 zum Mischen des phasenverschobenen Sendesignals und des Reflexionssignals r1(t) zugeleitet, das dem Mischer 39 mittels einer galvanischen Trennung 34 zugeleitet wird. Der Mischer 39 gibt ein Quadratur-Signal Q1 (t) aus. Das Inphase-Signal I1(t) und das Quadratur-Signal Q1(t) sind Mischsignale im Sinne der Ansprüche.

Die Radareinrichtung 30 weist einen Multiplikator 42 auf, mittels dessen das Quadratur-Signal Q1(t) mit der komplexen Zahl j zu jQ1(t) multipliziert wird. I1(t) und I1Q(t) werden zu einem komplexen Mischsignal m1(t) addiert. Das komplexe Mischsignal m1(t) ist ebenfalls ein Mischsignal im Sinne der Ansprüche. Die Radareinrichtung 30 weist zudem einen Frequenzanalysator 43, auf mittels dessen - z.B. durch eine FFT - ein Spektrum M1 ($\kappa$) des komplexen Mischsignals m1(t) über die Frequenz $\kappa$ gebildet wird.

Die Radareinrichtung 30 weist zudem eine Empfangsantenne 56 zum Empfang eines von einem Objekt wie dem Hindernis 20 reflektierten Reflexionssignals r2(t) des abgestrahlten Sendesignals s(t) auf. Das Sendesignal s(t) wird mittels einer galvanischen Trennung 52 einem Mischer 58 zum Mischen des Sendesignals s(t) und des Reflexionssignals r2(t) zugeleitet. Der Mischer 58 gibt ein Inphase-Signal I2(t) aus.

Das Sendesignal s(t) wird zudem mittels einer weiteren galvanischen Trennung 53 einem Phasenschieber 57 zugeleitet, mittels dessen die Phase des Sendesignals s(t) bezogen auf die Trägerfrequenz um 90° also $\pi/2$ verschoben wird. Das phasenverschobene Sendesignal wird einem Mischer 59 zum Mischen des phasenverschobenen Sendesignals und des Reflexionssignals r2(t) zugeleitet, das dem Mischer 59 mittels einer galvanischen Trennung 54 zugeleitet wird. Der Mischer 59 gibt ein Quadratur-Signal Q2(t) aus. Das Inphase-Signal I2(t) und das Quadratur-Signal Q2(t) sind Mischsignale im Sinne der Ansprüche.

Die Radareinrichtung 30 weist einen Multiplikator 62 auf, mittels dessen das Quadratur-Signal Q2(t) mit der komplexen Zahl j zu jQ2(t) multipliziert wird. I2(t) und j2Q(t) werden zu einem komplexen Mischsignal m2(t) addiert. Das komplexe Mischsignal m2(t) ist ebenfalls ein Mischsignal im Sinne der Ansprüche. Die Radareinrichtung 30 weist zudem einen Frequenzanalysator 63, auf mittels dessen - z.B. durch eine FFT - ein Spektrum M2($\kappa$) des komplexen Mischsignals m2(t) über die Frequenz $\kappa$ gebildet wird.

Mittels eines Analysators 44 wird eine Differenz $\Delta\psi 12$ der Phase des komplexen Mischsignals m1(t) und der Phase des komplexen Mischsignals m2(t) gebildet.

Die Radareinrichtung 30 weist einen Auswerter 45 zur Bestimmung des Winkels $\alpha$ zwischen der Strahlrichtung HSR der Radareinrichtung 30 und dem Objekt 20 entsprechend dem Zusammenhang

$$\alpha = \frac{\Delta\Psi 12 \cdot \lambda}{2\pi \cdot \Delta EA}$$

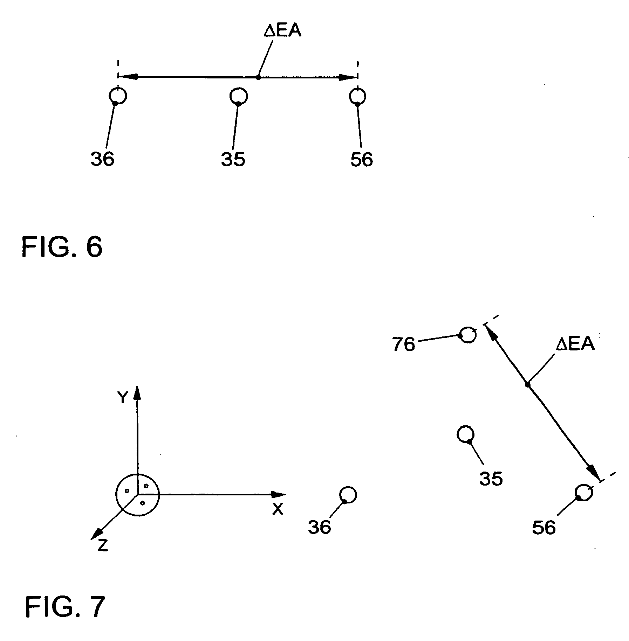

auf, wobei $\Delta EA$ - wie in Fig. 6 dargestellt - der Abstand zwischen der Empfangsantenne 36 und der Empfangsantenne 56 ist, und wobei $\lambda$ die (mittlere) Wellenlänge des Sendesignals s(t) ist.

Mittels des Analysators 44 werden optional die dominierende Frequenz $\kappa 1_A$ des Mischsignals m1(t) sowie die dominierende Frequenz $\kappa 2_A$ des Mischsignals m2(t) in Bezug auf die erste Signalfolge A(t) und die dominierende Frequenz $\kappa 1_B$ des Mischsignals m1(t) sowie die dominierende Frequenz $\kappa 2_B$ des Mischsignals m2(t) in Bezug auf die zweite Signalfolge B(t) ermittelt.

Die Verarbeitung der einzelnen Signalfolgen A(t) und B(t) erfolgt dabei vorteilhafterweise durch zeitliche Trennung separat, so dass mittels der Mischer 38 und 39 bzw. 58 und 59 die erste Signalabschnittsfolge A(t) mit einem von dem Objekt 20 reflektierten Anteil der ersten Signalabschnittsfolge A(t) (des Reflexionssignals r1(t) bzw. r2(t)) zu einem ersten Mischsignal $I1_A(t)$, $Q1_A(t)$ bzw. $m1_A(t)$ bzw. $I2_A(t)$, $Q2_A(t)$ bzw. $m2_A(t)$ und die zweite Signalabschnittsfolge B(t) mit einem von dem Objekt 20 reflektierten Anteil der zweiten Signalabschnittsfolge B(t) (des Reflexionssignals r1(t) bzw. r2(t)) zu einem zweiten Mischsignal $I1_B(t)$, $Q1_B(t)$ bzw. $m1_B(t)$ bzw. $I2_B(t)$, $Q2_B(t)$ bzw. $m2_B(t)$ gemischt wird. Mittels des Frequenzanalysators 43 wird dabei ein Spektrum $M1_A(\kappa)$ bzw. $M2_A(\kappa)$ des komplexen Mischsignals $m1_A(t)$ bzw. $m2_A(t)$ über die Frequenz $\kappa$ und ein Spektrum $M1_B(\kappa)$ bzw. $M2_B(\kappa)$ des komplexen Mischsignals $m1_B(t)$ bzw. $m2_B(t)$ über die Frequenz $\kappa$ gebildet. Mittels des Analysators 44 werden die dominierende Frequenz $\kappa1_A$ des komplexen Mischsignals $m1_A(t)$ und die dominierende Frequenz $\kappa2_A$ des komplexen Mischsignals $m2_A(t)$ (also in Bezug auf die erste Signalfolge $A(t)$) sowie die dominierende Frequenz $\kappa1_B$ des komplexen Mischsignals $m1_B(t)$ und die dominierende Frequenz $\kappa2_B$ des komplexen Mischsignals $m2_B(t)$ (also in Bezug auf die zweite Signalfolge $B(t)$) ermittelt.

Mittels des Auswerters 45 wird optional zur Bestimmung des Abstandes R und/oder der Differenzgeschwindigkeit v durch Lösen folgenden überbestimmten Gleichungssystems, z.B. durch einen Least-Square-Algorithmus, bestimmt:

$$\kappa1_A = \frac{2v \cdot f_T}{c} \cdot (N-1) \cdot T_{Burst} - \frac{2R}{c} \cdot f_{Hub,A}$$

$$\kappa2_A = \frac{2v \cdot f_T}{c} \cdot (N-1) \cdot T_{Burst} - \frac{2R}{c} \cdot f_{Hub,A}$$

$$\kappa1_B = \frac{2v \cdot f_T}{c} \cdot (N-1) \cdot T_{Burst} - \frac{2R}{c} \cdot f_{Hub,B}$$

$$\kappa2_B = \frac{2v \cdot f_T}{c} \cdot (N-1) \cdot T_{Burst} - \frac{2R}{c} \cdot f_{Hub,B}$$

wobei c die Lichtgeschwindigkeit ist.

Es kann zudem vorgesehen werden, dass mittels des Analysators 44 zusätzlich die Differenz $\Delta\psi1$ der Phase des komplexen Mischsignals $m1_A(t)$ und der Phase des komplexen Mischsignals $m1_B(t)$ sowie die Differenz $\Delta\psi2$ der Phase des komplexen Mischsignals $m2_A(t)$ und der Phase des komplexen Mischsignals $m2_B(t)$ ermittelt wird. In diesem Fall kann mittels des Auswerters 45 - zur Bestimmung des Abstandes R und/oder der Geschwindigkeitsdifferenz v - folgendes überbestimmtes Gleichungssystem, z.B. durch einen Least-Square-Algorithmus, gelöst werden:

$$\Delta\psi1 = -2\pi \cdot \left( \frac{2v \cdot f_T \cdot T_{Burst}}{c} + \frac{2R \cdot f_{Shift}}{c} \right)$$

$$\Delta\psi2 = -2\pi \cdot \left( \frac{2v \cdot f_T \cdot T_{Burst}}{c} + \frac{2R \cdot f_{Shift}}{c} \right)$$

$$\kappa1_A = \frac{2v \cdot f_T}{c} \cdot (N-1) \cdot T_{Burst} - \frac{2R}{c} \cdot f_{Hub,A}$$

$$\kappa 2_A = \frac{2v \cdot f_T}{c} \cdot (N-1) \cdot T_{Burst} - \frac{2R}{c} \cdot f_{Hub,A}$$

$$\kappa 1_B = \frac{2v \cdot f_T}{c} \cdot (N-1) \cdot T_{Burst} - \frac{2R}{c} \cdot f_{Hub,B}$$

$$\kappa 2_B = \frac{2v \cdot f_T}{c} \cdot (N-1) \cdot T_{Burst} - \frac{2R}{c} \cdot f_{Hub,B}$$

Es kann zudem vorgesehen werden, mehr als zwei Signalabschnittsfolgen zu verwenden. So können z.B. drei Signalabschnittsfolgen A(t), B(t) und C(t) unterschiedlicher Differenzfrequenz $f_{Hub,A}$/(N-1), $f_{Hub,B}$/(N-1) und $f_{Hub,C}$/(N-1) verwendet und entsprechend abgestrahlt und verarbeitet werden.

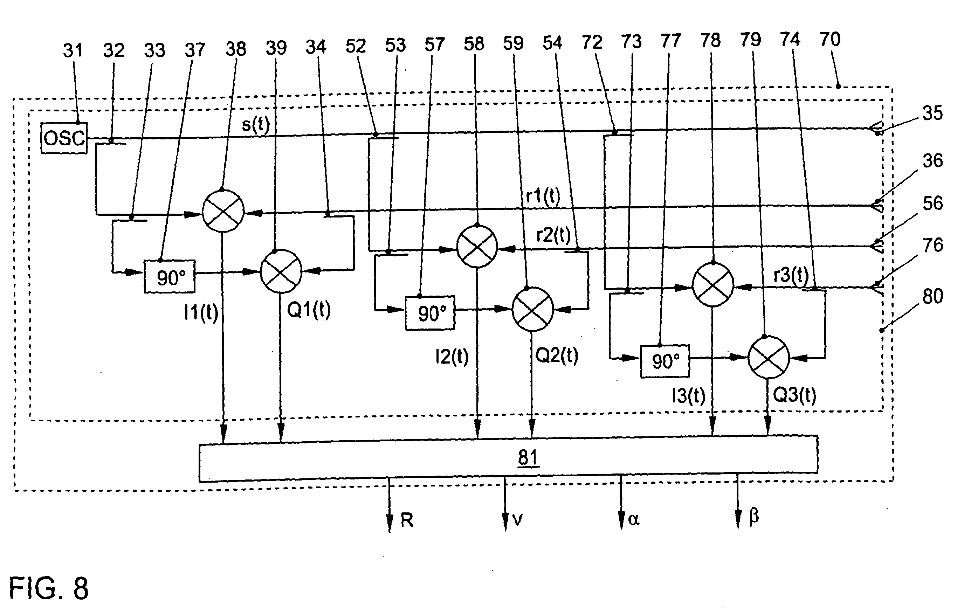

Wie in Fig. 7 und Fig. 8 dargestellt, können auch drei Empfangsantennen 36, 56 und 76 in einer Radareinrichtung 70 vorgesehen sein sein, wobei Fig. 7 eine vorteilhafte Anordnung der Empfangsantennen 36, 56 und 76 zeigt. Die Radareinrichtung 70 weist einen Radarsensor 80 auf, der gegenüber dem Radarsensor 40 weitere galvanische Trennungen 72, 73, 74, weitere Mischer 78, 79 und einen weiteren Phasenschieber 77 aufweist. Radarsensor 80 weist zudem die Empfangsantenne 76 zum Empfang eines von einem Objekt wie dem Hindernis 20 reflektierten Reflexionssignals r3(t) des abgestrahlten Sendesignals s(t) auf.

Die Radareinrichtung 70 weist eine Auswertevorrichtung 81 zur Bestimmung des Winkels α zwischen der Strahlrichtung und dem Objekt 20 in der durch die Koordinaten x und z aufgespannten Ebene und des Winkels β zwischen der Strahlrichtung und dem Objekt 20 in der durch die Koordinaten y und z aufgespannten Ebene sowie optional des Abstandes R und der Geschwindigkeitsdifferenz v in Abhängigkeit von Inphase-Signalen I1(t), I2(t), I3(t) und Quadratur-Signalen Q1(t), Q2(t), Q3(t) auf. Dazu ist die Auswertevorrichtung 81 mit entsprechenden Anpassungen gemäß der Auswertevorrichtung 41 ausgestaltet.

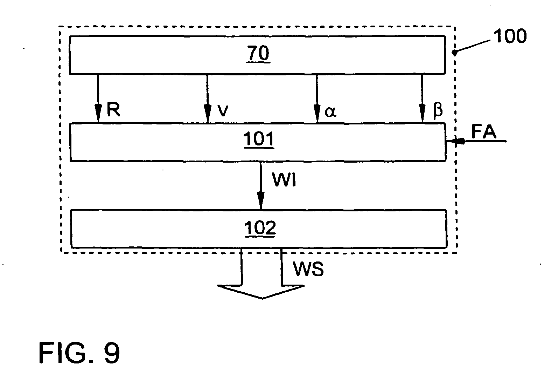

Fig. 9 zeigt ein Ausführungsbeispiel für ein Fahrassistenzsystem 100. Das Fahrassistenzsystem 100 weist die Radareinrichtung 70 auf. Es kann aber auch vorgesehen sein, dass das Fahrassistenzsystem 100 die Radareinrichtung 30 aufweist. Das Fahrassistenzsystem 100 weist einen Bewerter 101 zur Erzeugung einer Warninformation WI in Abhängigkeit des Winkels α zwischen der Strahlrichtung der Radareinrichtung 70 und dem Objekt 20 sowie in Abhängigkeit des Abstands R zwischen der Radareinrichtung 70 und dem Objekt 20 sowie optional in Abhängigkeit des Winkels β zwischen der Strahlrichtung der Radareinrichtung 70 und/oder dem Objekt 20 und der Geschwindigkeitsdifferenz v zwischen dem Radareinrichtung 70 und dem Objekt 20 auf. In vorteilhafter Ausgestaltung ist die Warninformation WI zudem in Abhängigkeit eines Zustandes FA eines Fahrrichtungsanzeigers erzeugbar.

Das Fahrassistenzsystem 100 weist zudem eine Ausgabevorrichtung 102 zur optischen, akustischen und/oder haptischen Ausgabe eines Warnsignals WS in Abhängigkeit der Warninformation WI auf.

Die erfindungsgemäßen Mess- bzw. Radareinrichtungen können vorteilhafterweise in einem Fahrassistenzsystem gemäß der DE 42 28 794 A1 eingesetzt werden.

Die Elemente, Signale und Frequenzbereiche in den Figuren sind unter Berücksichtigung von Einfachheit und Klarheit und nicht notwendigerweise maßstabsgetreu gezeichnet. So sind z.B. die Größenordnungen einiger Elemente, Signale bzw. Frequenzbereiche übertrieben dargestellt, um das Verständnis der Ausführungsbeispiele der vorliegenden Erfindung zu verbessern.

**Bezugszeichenliste**

| | |
|---|---|
| 1 | Kraftfahrzeug |
| 2, 3 | Stoßfänger |
| 4, 5 | Seitenspiegel |
| 6, 7 | Seitentür |
| 8 | Heckklappe |
| 10, 11, 12, 13, 14, 15, 16 | Winkel-, Abstands- und/oder Geschwindigkeitssensor |

| 20 | Objekt bzw. Hindernis |
|---|---|
| 30, 70 | Radareinrichtung |
| 31 | Signalgenerator |
| 32, 33, 34, 52, 53, 54, 72, 73, 74 | galvanische Trennung |
| 35 | Sendeantenne |
| 36, 56, 76 | Empfangsantenne |
| 37, 57, 77 | Phasenschieber |
| 38, 39, 58, 59, 78, 79 | Mischer |
| 40,80 | Radarsensor |
| 41, 81 | Auswertevorrichtung |
| 42, 62 | Multiplikator |
| 43, 43 | Frequenzanalysator |
| 44 | Analysator |
| 45 | Auswerter |
| 100 | Fahrassistenzsystem |
| 101 | Bewerter |
| 102 | Ausgabevorrichtung |

| A, B | Signalfolge |
|---|---|
| A1, A2, A3, B1, B2, B3 | Signalabschnitt |
| FA | Zustand eines Fahrrichtungsanzeigers |
| $f_{Hub,A}$, $f_{Hub,B}$ | Differenz zwischen der Trägerfrequenz des ersten Signalabschnitts einer Signalabschnittsfolge und der Trägerfrequenz des letzten Signalabschnitts der Signalabschnittsfolge |
| $f_{Shift}$ | Frequenzversatz |
| $f_T(t)$ | Trägerfrequenz |
| I1 (t), I2(t), I3(t) | Inphase-Signal |
| m1(t), m2(t) | komplexes Mischsignal |
| $M(\kappa)$ | Spektrum |
| Q1(t), Q2(t), Q3(t) | Quadratur-Signal |
| R | Abstand |
| r1 (t), r2(t), r3(t) | Reflexionssignal |
| s(t) | Sendesignal |
| t | Zeit |
| $T_{Burst}$ | Zeitdauer |
| v | Geschwindigkeitsdifferenz |
| vF | Geschwindigkeit des Kraftfahrzeugs |
| vH | Geschwindigkeit des Hindernisses |
| WI | Warninformation |
| WS | Warnsignal |
| x, y, z | Koordinaten |
| $\Delta$EA | Abstand zwischen zwei Empfangsantennen |
| $\Delta\psi1$, $\Delta\psi2$ $\Delta\psi12$ | Phasendifferenz zweier Mischsignale |
| $\kappa$ | Frequenz |
| $\kappa1_A$, $\kappa1_B$, $\kappa2_A$, $\kappa2_B$ | dominierende Frequenz eines komplexen Mischsignals |

## Patentansprüche

1. Messeinrichtung (30, 70), insbesondere Messeinrichtung (30, 70) für ein Kraftfahrzeug (1), zum Messen eines Winkels ($\alpha$, $\beta$) zwischen einer Strahlrichtung (HSR) der Messeinrichtung (30, 70) und einem Objekt (20), wobei die Messeinrichtung (30, 70) eine Abstrahlvorrichtung (35) zum Abstrahlen eines Sendesignals (s(t)),

    - eine erste Empfangseinrichtung (36) zum Empfang eines von dem Objekt (20) reflektierten Reflexionssignals (r1 (t)) des abgestrahlten Sendesignals (s(t)),
    - zumindest eine zweite Empfangseinrichtung (56) zum Empfang des von dem Objekt (20) reflektierten Reflexionssignals (r2(t)) des abgestrahlten Sendesignals (s(t)),
    - zumindest einen ersten Mischer (38, 39) zum Mischen des Sendesignals (s(t)) mit dem mittels der ersten Empfangseinrichtung (36) empfangen Reflexionssignals (r1(t)) und

- zumindest einen zweiten Mischer (58, 59) zum Mischen des Sendesignals (s(t)) mit dem mittels der zweiten Empfangseinrichtung (56) empfangenen Reflexionssignals (r2(t)) aufweist,

**dadurch gekennzeichnet, dass**

das Sendesignal (s(t))

- zumindest eine erste Signalabschnittsfolge (A(t)) mit zumindest zwei zeitlich alternierenden Signalabschnitten (A1, A2, A3, ...), die sich in ihrer Frequenz um eine Differenzfrequenz ($f_{Hub.A}$/(N-1)) unterscheiden, und
- zumindest eine zweite Signalabschnittsfolge (B(t)) mit zumindest zwei zeitlich alternierenden Signalabschnitten (B1, B2, B3, ...), die sich in ihrer Frequenz um eine Differenzfrequenz ($f_{Hub,B}$/(N-1))unterscheiden, umfasst,

wobei die Differenzfrequenz ($f_{Hub.A}$(N-1)) der ersten Signilabschnittsfolge (A(t)) von der Differenzfrequenz ($f_{Hub.B}$/(N-1)) der zweiten Signalabschnittsfolge (B(t)) verschieden ist.

2. Messeinrichtung nach Anspruch 1, **dadurch gekennzeichnet, dass** die Differenzfrequenz ($f_{Hub.A}$/(N-1)) der ersten Signalabschnittsfolge (A(t)) von der Differenzfrequenz ($f_{Hub,B}$/(N-1)) der zweiten Signalabschniitsfolge (B(t)) um mindestens 5%, vorteilhafterweise um mindestens 10%, verschieden ist.

3. Messeinrichtung (30, 70) nach Anspruch 1 oder 2. **dadurch gekennzeichnet, dass** mittels des ersten Mischers (38, 39) ein erstes Mischsignal bildbar ist.

4. Messeinrichtung (30, 70) nach einem der vorangegangen Ansprüche, **dadurch gekennzeichnet, dass** mittels des zweiten Mischers (58, 59) ein zweites Mischsignal bildbar ist.

5. Messeinrichtung (30, 70) nach Anspruch 4. **dadurch gekennzeichnet, dass** es eine Auswertevorrichtung (61, 81) zur Bestimmung des Winkels ($\alpha$, $\beta$) zwischen der Strahlrichtung (HSR) der Messeinrichtung (30, 70) und dem Objekt (20) in Abhängigkeit des ersten Mischsignals und des zweiten Mischsignals aufweist.

6. Messeinrichtung (30, 70) nach Anspruch 4 oder 5, **dadurch gekennzeichnet, dass** mittels der Auswertevorrichtung (61, 81) der Winkel ($\alpha$, $\beta$) zwischen der Strahlrichtung (HSR) der Messeinrichtung (30, 70) und dem Objekt (20) in Abhangigkeit der Differenz ($\Delta\Psi12$) der Phase des ersten Mischsignals und der Phase des zweiten Mischsignals bestimmbar ist.

7. Messeinrichtung (30, 70) nach einem der vorhergehenden Ansprüche, **dadurch gekennzeichnet, dass** mittels der Messeinrichtung (30, 70) ein Abstand (R) zwischen der Messeinrichtung (30, 70) und dem Objekt (20) messbar ist.

8. Messeinrichtung (30, 70) nach einem der Ansprüche, **dadurch gekennzeichnet, dass** mittels der Messeinrichtung (30, 70) eine Geschwindigkeitsdifferenz (v) zwischen der Messeinrichtung (30, 70) und dem Objekt (20) messbar ist.

9. Messeinrichtung (30, 70) nach einem der vorhergehenden Ansprüche, **dadurch gekennzeichnet, dass** es nicht mehr als eine Abstrahlvorrichtung (35) aufweist.

10. Messeinrichtung (30, 70) nach einem der vorhergehenden Ansprüche, **dadurch gekennzeichnet, dass** es nicht mehr als zwei Empfangseinrichtungen (36, 56) aufweist.

11. Messeinrichtung (30, 70j nach einem der vorhergehenden Ansprüche, **dadurch gekennzeichnet, dass** es die Abstrahlvorrichtung (35) un die Empfangseinrichtungen (36, 56, 76) in einem Gehäuse integriert sind.

12. Messeinrichtung (30, 70) nach einem der Ansprüche 1 bis 9 oder 11, **dadurch gekennzeichnet, dass** es drei Empfangseinrichtungen (36, 56, 76) aufweist.

13. Messeinrichtung (30, 70) nach Anspruch 12, **dadurch gekennzeichnet, dass** es nicht mehr als drei Empfangseinrichtungen (36, 56, 76) aufweist.

14. Messeinrichtung (30, 70) nach einem der vorhergehenden Ansprüche, **dadurch gekennzeichnet, dass** mittels der Messeinrichtung (30, 70) sein erster Winkel ($\alpha$) zwischen der Strahlrichtung (HSR) der Messeinrichtung (30, 70) und dem Objekt (20) in einer ersten Ebene und ein zweiter Winkel ($\beta$) zwischen der Strahlrichtung (HSR) der Messeinrichtung (30, 70) und dem Objekt (20) in einer zweiten Ebene messbar ist.

**15.** Messeinrichtung (30, 70) nach Anspruch 14, **dadurch gekennzeichnet, dass** die erste Ebene und die zweite Ebene orthogonal sind.

**16.** Messeinrichtung (30, 70) nach einem der vorhergehender Ansprüche, **dadurch gekennzeichnet, dass** die Abstrahlvorrichtung (35) eine Antenne umfasst.

**17.** Messeinrichtung (30, 70) nach einem der vorhergehenden Ansprüche, **dadurch gekennzeichnet, dass** die Empfangseinrichtungen (36, 56, 76) je eine Antenne umfassen.

**18.** Fahrassistenzsystem (100) mit einer Messeinrichtung (30, 70) nach einem der vorhergehenden Ansprüche, **dadurch gekennzeichnet, dass** das Fahrassistenzsystem (100) einen Bewerter (101) zur Erzeugung einer Warninformation (WI) in Abhängigkeit des Winkels ($\alpha$, $\beta$) zwischen der Strahlrichtung (HSR) der Messeinrichtung (30, 70) und dem Objekt (20) sowie in Abhängigkeit des Abstands (R) der Messeinrichtung (30, 70) und dem Objekt (20) aufweist.

**19.** Fahrassistenzsystem (100) nach Anspruch 18, **dadurch gekennzeichnet, dass** die Warninformation (WI) mittels des Bewerters (101) zudem in Abhängigeit der Geschwindigkeltsdifferenz (v) zwischen der Messeinrichtung (30, 70) und dem Objekt (20) erzeugbar ist.

**20.** Fahrassistenzsystem (100) nach Anspruch 18 oder 19, **dadurch gekennzeichnet, dass** die Warninformation (WI) mittels des Bewerters (101) zudem in Abhängigkeit eines Zustandes (FA) eines Fahrrichtungsanzeigers erzeugbar ist.

**21.** Fahrassistenzsystem (100) nach Anspruch 18, 19 oder 20, **dadurch gekennzeichnet, dass** es eine Ausgabevorrichtung (102) zur optischen, akustischen und/oder haptischen Ausgabe eines Warnsignals (WS) in Abhängigkeit der de Warninformation (WI) aufweist.

**22.** Verfahren zum Messen eines Winkels ($\alpha$, $\beta$) zwischen einer Strahlrichtung (HSR) einer Messeinrichtung (30, 70), insbesondere einer Messeinrichtung (30, 70) für ein Kraftfahrzeug (1), und einem Objekt (20),

- wobei ein Sendesignal (s(t)) gesendet wird,
- wobei mittels einer ersten Empfangseinrichtung (36) ein von dem Objekt (20) reflektiertes Reflexionssignal (r1 (t)) des abgestrahlten Sendesignals (s(t)) empfangen wird,
- wobei mittels einer zweiten Empfangseinrichtung (56) das von dem Objekt (20) reflektierte Reflexionssignal (r2(t)) des abgestrahlten Sendesignals (s(t)) empfangen wird,
- wobei das Sendesignal (s(t)) mit dem mittels der ersten Empfangseinrichtung (36) empfangene Reflexionssignal (r1(t)) zu einem ersten Mischsignal gemischt wird, und wobei das Sendesignal (s(t)) mit dem mittels der zweiten Empfangseinrichtung (56) empfangene Reflexionssignal (r2(t)) zu einem zweiten gemischt wird, **dadurch gekennzeichnet, dass** das Sendesignal (s(t))
- zumindest eine erste Signalabschnittsfolge (A(t)) mit zumindest zwei zeitlich alternierenden Signalabschnitten (A1, A2, A3, ...), die sich in ihrer Frequenz um eine Differenzfrequenz ($f_{Hub,A}/(N-1)$) unterscheiden, und
- zumindest eine zweite Signalabschnittsfolge (B(t)) mit zumindest zwei zeitlich alternierenden Signalabschnitten (B1, B2, B3, ...), die sich in ihrer Frequenz um eine Differenzfrequenz ($f_{Hub,B}/(N-1)$)unterscheiden, umfasst,

wobei die Differenzfrequenz ($f_{Hub,A}/(N-1)$) der ersten Signalabsohnittsfolge (A(t)) von der Differenzfrequenz ($f_{Hub,B}/(N-1)$) der zweiten Signalabschnittsfolge (B(t)) verschieden ist.

**23.** Verfahren nach Anspruch 22, **dadurch gekennzeichnet, dass** die Differenzfrequenz ($f_{Hub,B}/(N-1)$) der ersten Signalabschnittsfolge (A(t)) von der Differenzfrequenz ($f_{Hub,B}/(N-1)$) der zweiten Signalabschnittsfolge (B(t)) um mindestens 5%, vorteilhafterweise um mindestens 10%, verschieden ist.

**24.** Verfahren nach Anspruch 22 oder 23, **dadurch gekennzeichnet, dass** der Winkel ($\alpha$, $\beta$) zwischen der Strahlrichtung (HSR) der Messeinrichtung (30, 70) und dem Objekt (20) in Abhängigkeit des ersten Mischsignals und des zweiten Mischsignals bestimmt wird.

**25.** Verfahren nach einem der Ansprüche 22 bis 24, dadurch dass der Winkel ($\alpha$, $\beta$) zwischen der Strahlrichtung (HSR) der Messeinrichtung (30, 70) und dem Objekt (20) in Abhängigkeit der Differenz ($\Delta\Psi 12$) der Phase des ersten Mischsignals und der Phase des zweiten Mischsignals bestimmt wird.

26. Verfahren nach einem der Ansprüche 22 bis 25, **dadurch gekennzeichnet, dass** ein Abstand (R) zwischen der Messeinrichtung (30, 70) und dem Objekt (20) in Abhängigkeit des ersten Mischsignals und/oder des zweiten Mischsignals bestimmt wird.

27. Verfahren nach einem der Ansprüche 22 bis 26, **dadurch gekennzeichnet, dass** eine Geschwindigkeitsdifferenz (v) zwischen der Messeinrichtung (30, 70) und dem Objekt (20) in Abhängigkeit des ersten Mischsignals und/oder des zweiten Mischsignals bestimmt wird.

28. Verfahren nach einem der Ansprüche 22 bis 27, **dadurch gekennzeichnet, dass** ein optisches, akustisches und/oder haptisches Warnsignal (WS) in Abhängigkeit des Winkels (α, β) zwischen der Strahlrichtung (HSR) der Messeinrichtung (30, 70) und dem Objekt (20) sowie in Abhängigkeit des Abstands (R) zwischen der Messeinrichtung (30, 70) und dem Objekt (20) erzeugt wird.

29. Verfahren nach Anspruch 28, **dadurch gekennzeichnet, dass** das optische, akustische und/oder haptische Warnsignal (WS) zudem in Abhängigkeit der Geschwindigkeitsdifferenz (v) zwischen der Messeinrichtung (30, 70) und dem Objekt (20) erzeugt wird.

30. Verfahren nach Anspruch 28 oder 29, **dadurch gekennzeichnet, dass** das optische, akustische und/oder haptische Warnsignal (WS) zudem in Abhängigkeit eines Zustandes (FA) eines Fahrrichtungsanzeigers erzeugt wird.

**Claims**

1. Measuring device (30, 70), in particular measuring device (30, 70) for a motor vehicle (1), for measuring an angle (α, β) between a beam direction (HSR) of the measuring device (30, 70) and an object (20), the measuring device (30, 70) having

   - an emission apparatus (35) for emitting a transmission signal (s(t)),
   - a first receiving device (36) for receiving a reflection signal (r1(t)) of the emitted transmission signal (s(t)), which reflection signal is reflected by the object (20),
   - at least one second receiving device (56) for receiving the reflection signal (r2(t)) of the emitted transmission signal (s(t)), which reflection signal is reflected by the object (20),
   - at least one first mixer (38, 39) for mixing the transmission signal (s(t)) with the reflection signal (r1(t)) received using the first receiving device (36), and
   - at least one second mixer (58, 59) for mixing the transmission signal (s(t)) with the reflection signal (r2(t)) received using the second receiving device (56),

   **characterized in that**
   the transmission signal (s(t)) comprises

   - at least one first signal section sequence (A(t)) having at least two temporally alternating signal sections (A1, A2, A3, ...) whose frequencies differ by a difference frequency ($f_{Hub,A}/(N-1)$), and
   - at least one second signal section sequence (B(t)) having at least two temporally alternating signal sections (B1, B2, B3, ...) whose frequencies differ by a difference frequency ($f_{HUb,B}/(N-1)$), the difference frequency ($f_{Hub,A}/(N-1)$) of the first signal section sequence (A(t)) differing from the difference frequency ($f_{Hub,B}/(N-1)$) of the second signal section sequence (B(t)).

2. Measuring device according to Claim 1, **characterized in that** the difference frequency ($f_{Hub,A}/(N-1)$) of the first signal section sequence (A(t)) differs from the difference frequency ($f_{Hub,B}/(N-1)$) of the second signal section sequence (B(t)) by at least 5%, advantageously by at least 10%.

3. Measuring device (30, 70) according to Claim 1 or 2, **characterized in that** a first mixed signal can be formed using the first mixer (38, 39).

4. Measuring device (30, 70) according to one of the preceding claims, **characterized in that** a second mixed signal can be formed using the second mixer (58, 59).

5. Measuring device (30, 70) according to Claim 4, **characterized in that** it has an evaluation apparatus (61, 81) for determining the angle (α, β) between the beam direction (HSR) of the measuring device (30, 70) and the object (20) on the basis of the first mixed signal and the second mixed signal.

6. Measuring device (30, 70) according to Claim 4 or 5, **characterized in that** the angle (α, β) between the beam direction (HSR) of the measuring device (30, 70) and the object (20) can be determined using the evaluation apparatus (61, 81) on the basis of the difference (ΔΨ12) between the phase of the first mixed signal and the phase of the second mixed signal.

7. Measuring device (30, 70) according to one of the preceding claims, **characterized in that** a distance (R) between the measuring device (30, 70) and the object (20) can be measured using the measuring device (30, 70).

8. Measuring device (30, 70) according to one of the preceding claims, **characterized in that** a speed difference (v) between the measuring device (30, 70) and the object (20) can be measured using the measuring device (30, 70).

9. Measuring device (30, 70) according to one of the preceding claims, **characterized in that** it does not have more than one emission apparatus (35).

10. Measuring device (30, 70) according to one of the preceding claims, **characterized in that** it does not have more than two receiving devices (36, 56).

11. Measuring device (30, 70) according to one of the preceding claims, **characterized in that** the emission apparatus (35) and the receiving devices (36, 56, 76) are integrated in a housing.

12. Measuring device (30, 70) according to one of Claims 1 to 9 or 11, **characterized in that** it has three receiving devices (36, 56, 76).

13. Measuring device (30, 70) according to Claim 12, **characterized in that** it does not have more than three receiving devices (36, 56, 76).

14. Measuring device (30, 70) according to one of the preceding claims, **characterized in that** a first angle (α) between the beam direction (HSR) of the measuring device (30, 70) and the object (20) can be measured in a first plane and a second angle (β) between the beam direction (HSR) of the measuring device (30, 70) and the object (20) can be measured in a second plane using the measuring device (30, 70).

15. Measuring device (30, 70) according to Claim 14, **characterized in that** the first plane and the second plane are orthogonal.

16. Measuring device (30, 70) according to one of the preceding claims, **characterized in that** the emission apparatus (35) comprises an antenna.

17. Measuring device (30, 70) according to one of the preceding claims, **characterized in that** the receiving devices (36, 56, 76) each comprise an antenna.

18. Driver assistance system (100) having a measuring device (30, 70) according to one of the preceding claims, **characterized in that** the driver assistance system (100) has an assessor (101) for generating warning information (WI) on the basis of the angle (α, β) between the beam direction (HSR) of the measuring device (30, 70) and the object (20) and on the basis of the distance (R) between the measuring device (30, 70) and the object (20).

19. Driver assistance system (100) according to Claim 18, **characterized in that** the warning information (WI) can be additionally generated using the assessor (101) on the basis of the speed difference (v) between the measuring device (30, 70) and the object (20).

20. Driver assistance system (100) according to Claim 18 or 19, **characterized in that** the warning information (WI) can be additionally generated using the assessor (101) on the basis of a state (FA) of a direction indicator.

21. Driver assistance system (100) according to Claim 18, 19 or 20, **characterized in that** it has an output apparatus (102) for visually, audibly and/or haptically outputting a warning signal (WS) on the basis of the warning information (WI).

22. Method for measuring an angle ($\alpha$, $\beta$) between a beam direction (HSR) of a measuring device (30, 70), in particular a measuring device (30, 70) for a motor vehicle (1), and an object (20),

- a transmission signal (s(t)) being transmitted,
- a first receiving device (36) being used to receive a reflection signal (r1(t)) of the emitted transmission signal (s(t)), which reflection signal is reflected by the object (20),
- a second receiving device (56) being used to receive the reflection signal (r2(t)) of the emitted transmission signal (s(t)), which reflection signal is reflected by the object (20),
- the transmission signal (s(t)) being mixed with the reflection signal (r1(t)) received using the first receiving device (36) to form a first mixed signal, and the transmission signal (s(t)) being mixed with the reflection signal (r2(t)) received using the second receiving device (56) to form a second mixed signal,

**characterized in that**
the transmission signal (s(t)) comprises

- at least one first signal section sequence (A(t)) having at least two temporally alternating signal sections (A1, A2, A3, ...) whose frequencies differ by a difference frequency ($f_{Hub,A}/(N-1)$), and
- at least one second signal section sequence (B(t)) having at least two temporally alternating signal sections (B1, B2, B3, ...) whose frequencies differ by a difference frequency ($f_{HUb,B}/(N-1)$), the difference frequency ($f_{Hub,A}/(N-1)$) of the first signal section sequence (A(t)) differing from the difference frequency ($f_{Hub,B}/(N-1)$) of the second signal section sequence (B(t)).

23. Method according to Claim 22, **characterized in that** the difference frequency ($f_{Hub,A}/(N-1)$) of the first signal section sequence (A(t)) differs from the difference frequency ($f_{Hub,B}/(N-1)$) of the second signal section sequence (B(t)) by at least 5%, advantageously by at least 10%.

24. Method according to Claim 22 or 23, **characterized in that** the angle ($\alpha$, $\beta$) between the beam direction (HSR) of the measuring device (30, 70) and the object (20) is determined on the basis of the first mixed signal and the second mixed signal.

25. Method according to one of Claims 22 to 24, **characterized in that** the angle ($\alpha$,$\beta$) between the beam direction (HSR) of the measuring device (30, 70) and the object (20) is determined on the basis of the difference ($\Delta\Psi 12$) between the phase of the first mixed signal and the phase of the second mixed signal.

26. Method according to one of Claims 22 to 25, **characterized in that** a distance (R) between the measuring device (30, 70) and the object (20) is determined on the basis of the first mixed signal and/or the second mixed signal.

27. Method according to one of Claims 22 to 26, **characterized in that** a speed difference (v) between the measuring device (30, 70) and the object (20) is determined on the basis of the first mixed signal and/or the second mixed signal.

28. Method according to one of Claims 22 to 27, **characterized in that** a visual, audible and/or haptic warning signal (WS) is generated on the basis of the angle ($\alpha$, $\beta$) between the beam direction (HSR) of the measuring device (30, 70) and the object (20) and on the basis of the distance (R) between the measuring device (30, 70) and the object (20).

29. Method according to Claim 28, **characterized in that** the visual, audible and/or haptic warning signal (WS) is additionally generated on the basis of the speed difference (v) between the measuring device (30, 70) and the object (20).

30. Method according to Claim 28 or 29, **characterized in that** the visual, audible and/or haptic warning signal (WS) is additionally generated on the basis of a state (FA) of a direction indicator.

**Revendications**

1. Dispositif de mesure (30, 70), notamment dispositif de mesure (30, 70) pour un véhicule automobile (1) pour mesurer un angle ($\alpha$, $\beta$) entre un sens du rayon (HSR) du dispositif de mesure (30, 70) et un objet (20), le dispositif de mesure (30, 70) présentant

- un dispositif de rayonnement (35) pour rayonner un signal émis (s(t)),
- un premier dispositif de réception (36) pour recevoir un signal de réflexion (r1(t)) du signal émis (s(t)) rayonné réfléchi par l'objet (20),
- au moins un deuxième dispositif de réception (56) pour recevoir le signal de réflexion (r2(t)) du signal émis (s(t)) rayonné réfléchi par l'objet (20),
- au moins un premier mélangeur (38, 39) pour mélanger le signal émis (s(t)) avec le signal de réflexion (r1(t)) reçu au moyen du premier dispositif de réception (36) et
- au moins un deuxième mélangeur (58, 59) pour mélanger le signal émis (s(t)) avec le signal de réflexion (r2(t)) reçu au moyen du deuxième dispositif de réception (56),

**caractérisé en ce que**
le signal émis (s(t)) inclut

- au moins une première séquence de portions de signal (A(t)) comprenant au moins deux portions de signal (A1, A2, A3, ...) alternées dans le temps qui se différencient au niveau de leurs fréquences par une fréquence différentielle ($f_{Hub,A}$/(N-1)) et
- au moins une deuxième séquence de portions de signal (B(t)) comprenant au moins deux portions de signal (B1, B2, B3, ...) alternées dans le temps qui se différencient au niveau de leurs fréquences par une fréquence différentielle ($f_{Hub,B}$/(N-1)),
la fréquence différentielle ($f_{Hub,A}$/(N-1)) de la première séquence de portions de signal (A(t)) étant différente de la fréquence différentielle ($f_{Hub,B}$/(N-1)) de la deuxième séquence de portions de signal (B(t)).

2. Dispositif de mesure selon la revendication 1, **caractérisé en ce que** la fréquence différentielle ($f_{Hub,A}$/(N-1)) de la première séquence de portions de signal (A(t)) diffère de la fréquence différentielle ($f_{Hub,B}$/(N-1)) de la deuxième séquence de portions de signal (B(t)) d'au moins 5 %, avantageusement d'au moins 10 %.

3. Dispositif de mesure (30, 70) selon la revendication 1 ou 2, **caractérisé en ce qu'**un premier signal mélangé peut être formé au moyen du premier mélangeur (38, 39).

4. Dispositif de mesure (30, 70) selon l'une des revendications précédentes, **caractérisé en ce qu'**un deuxième signal mélangé peut être formé au moyen du deuxième mélangeur (58, 59).

5. Dispositif de mesure (30, 70) selon la revendication 4, **caractérisé en ce qu'**il présente un dispositif d'interprétation (61, 81) destiné à déterminer l'angle ($\alpha$, $\beta$) entre le sens du rayon (HSR) du dispositif de mesure (30, 70) et l'objet (20) en fonction du premier signal mélangé et du deuxième signal mélangé.

6. Dispositif de mesure (30, 70) selon la revendication 4 ou 5, **caractérisé en ce que** l'angle ($\alpha$, $\beta$) entre le sens du rayon (HSR) du dispositif de mesure (30, 70) et l'objet (20) peut être déterminé au moyen du dispositif d'interprétation (61, 81) en fonction de la différence ($\Delta\psi$12) entre la phase du premier signal mélangé et la phase du deuxième signal mélangé.

7. Dispositif de mesure (30, 70) selon l'une des revendications précédentes, **caractérisé en ce qu'**une distance (R) entre le dispositif de mesure (30, 70) et l'objet (20) peut être mesurée au moyen du dispositif de mesure (30, 70).

8. Dispositif de mesure (30, 70) selon l'une des revendications précédentes, **caractérisé en ce qu'**une différence de vitesse (v) entre le dispositif de mesure (30, 70) et l'objet (20) peut être mesurée au moyen du dispositif de mesure (30, 70).

9. Dispositif de mesure (30, 70) selon l'une des revendications précédentes, **caractérisé en ce qu'**il ne présente pas plus d'un dispositif de rayonnement (35).

10. Dispositif de mesure (30, 70) selon l'une des revendications précédentes, **caractérisé en ce qu'**il ne présente pas plus de deux dispositifs de réception (36, 56).

11. Dispositif de mesure (30, 70) selon l'une des revendications précédentes, **caractérisé en ce que** le dispositif de rayonnement (35) et les dispositifs de réception (36, 56, 76) sont intégrés dans un boîtier.

12. Dispositif de mesure (30, 70) selon l'une des revendications 1 à 9 ou 11, **caractérisé en ce qu'**il présente trois dispositifs de réception (36, 56, 76).

**13.** Dispositif de mesure (30, 70) selon la revendication 12, **caractérisé en ce qu'**il ne présente pas plus de trois dispositifs de réception (36, 56, 76).

**14.** Dispositif de mesure (30, 70) selon l'une des revendications précédentes, **caractérisé en ce que** le dispositif de mesure (30, 70) permet de mesurer un premier angle (α) entre le sens du rayon (HSR) du dispositif de mesure (30, 70) et l'objet (20) dans un premier plan et un deuxième angle (β) entre le sens du rayon (HSR) du dispositif de mesure (30, 70) et l'objet (20) dans un deuxième plan.

**15.** Dispositif de mesure (30, 70) selon la revendication 14, **caractérisé en ce que** le premier plan et le deuxième plan sont orthogonaux.

**16.** Dispositif de mesure (30, 70) selon l'une des revendications précédentes, **caractérisé en ce que** le dispositif de rayonnement (35) comprend une antenne.

**17.** Dispositif de mesure (30, 70) selon l'une des revendications précédentes, **caractérisé en ce que** les dispositifs de réception (36, 56, 76) comprennent chacun une antenne.

**18.** Système d'assistance à la conduite (100) comprenant un dispositif de mesure (30, 70) selon l'une des revendications précédentes, **caractérisé en ce que** le système d'assistance à la conduite (100) présente un évaluateur (101) pour générer une information d'alerte (WI) en fonction de l'angle (α, β) entre le sens du rayon (HSR) du dispositif de mesure (30, 70) et l'objet (20) et aussi en fonction de la distance (R) entre le dispositif de mesure (30, 70) et l'objet (20).

**19.** Système d'assistance à la conduite (100) selon la revendication 18, **caractérisé en ce que** l'information d'alerte (WI) peut être générée au moyen de l'évaluateur (101) en plus en fonction de la différence de vitesse (v) entre le dispositif de mesure (30, 70) et l'objet (20).

**20.** Système d'assistance à la conduite (100) selon la revendication 18 ou 19, **caractérisé en ce que** l'information d'alerte (WI) peut être générée au moyen de l'évaluateur (101) en plus en fonction d'un état (FA) d'un indicateur de sens de déplacement.

**21.** Système d'assistance à la conduite (100) selon la revendication 18, 19 ou 20, **caractérisé en ce qu'**il présente un système d'émission (102) pour l'émission visuelle, sonore et/ou tactile d'un signal d'alerte (WS) en fonction de l'information d'alerte (WI).

**22.** Procédé pour mesurer un angle (α, β) entre un sens du rayon (HSR) d'un dispositif de mesure (30, 70), notamment un dispositif de mesure (30, 70) pour un véhicule automobile (1), et un objet (20),

- selon lequel un signal émis (s(t)) est émis,
- selon lequel un signal de réflexion (r1(t)) du signal émis (s(t)) rayonné réfléchi par l'objet (20) est reçu au moyen d'un premier dispositif de réception (36),
- selon lequel le signal de réflexion (r2(t)) du signal émis (s(t)) rayonné réfléchi par l'objet (20) est reçu au moyen d'un deuxième dispositif de réception (56),
- selon lequel le signal émis (s(t)) est mélangé avec le signal de réflexion (r1(t)) reçu au moyen du premier dispositif de réception (36) pour former un premier signal mélangé, et
- selon lequel le signal émis (s(t)) est mélangé avec le signal de réflexion (r2(t)) reçu au moyen du deuxième dispositif de réception (56) pour former un deuxième signal mélangé,

**caractérisé en ce que**
le signal émis (s(t)) inclut

- au moins une première séquence de portions de signal (A(t)) comprenant au moins deux portions de signal (A1, A2, A3, ...) alternées dans le temps qui se différencient au niveau de leurs fréquences par une fréquence différentielle ($f_{Hub,A}/(N-1)$) et
- au moins une deuxième séquence de portions de signal (B(t)) comprenant au moins deux portions de signal (B1, B2, B3, ...) alternées dans le temps qui se différencient au niveau de leurs fréquences par une fréquence différentielle ($f_{Hub,B}/(N-1)$),

la fréquence différentielle ($f_{Hub,A}$/(N-1)) de la première séquence de portions de signal (A(t)) étant différente de la fréquence différentielle ($f_{Hub,B}$/(N-1)) de la deuxième séquence de portions de signal (B(t)).

23. Procédé selon la revendication 22, **caractérisé en ce que** la fréquence différentielle ($f_{Hub,A}$/(N-1)) de la première séquence de portions de signal (A(t)) diffère de la fréquence différentielle ($f_{Hub,B}$/(N-1)) de la deuxième séquence de portions de signal (B(t)) d'au moins 5 %, avantageusement d'au moins 10 %.

24. Procédé selon la revendication 22 ou 23, **caractérisé en ce que** l'angle ($\alpha$, $\beta$) entre le sens du rayon (HSR) du dispositif de mesure (30, 70) et l'objet (20) est déterminé en fonction du premier signal mélangé et du deuxième signal mélangé.

25. Procédé selon l'une des revendications 22 à 24, **caractérisé en ce que** l'angle ($\alpha$, $\beta$) entre le sens du rayon (HSR) du dispositif de mesure (30, 70) et l'objet (20) est déterminé en fonction de la différence ($\Delta\psi 12$) entre la phase du premier signal mélangé et la phase du deuxième signal mélangé.

26. Procédé selon l'une des revendications 22 à 25, **caractérisé en ce qu'**une distance (R) entre le dispositif de mesure (30, 70) et l'objet (20) est déterminée en fonction du premier signal mélangé et/ou du deuxième signal mélangé.

27. Procédé selon l'une des revendications 22 à 26, **caractérisé en ce qu'**une différence de vitesse (v) entre le dispositif de mesure (30, 70) et l'objet (20) est déterminée en fonction du premier signal mélangé et/ou du deuxième signal mélangé.

28. Procédé selon l'une des revendications 22 à 27, **caractérisé en ce qu'**un signal d'alerte (WS) visuel, sonore et/ou tactile est généré en fonction de l'angle ($\alpha$, $\beta$) entre le sens du rayon (HSR) d'un dispositif de mesure (30, 70) et l'objet (20) et aussi en fonction de la distance (R) entre le dispositif de mesure (30, 70) et l'objet (20).

29. Procédé selon la revendication 28, **caractérisé en ce que** le signal d'alerte (WS) visuel, sonore et/ou tactile est en plus généré en fonction de la différence de vitesse (v) entre le dispositif de mesure (30, 70) et l'objet (20).

30. Procédé selon la revendication 28 ou 29, **caractérisé en ce que** le signal d'alerte (WS) visuel, sonore et/ou tactile est en plus généré en fonction d'un état (FA) d'un indicateur de sens de déplacement.

FIG. 1

vH →

vF ←

1

8

20

R

16    2    6    7    3

FIG. 2

EP 1 519 204 B1

FIG. 3

FIG. 4

FIG. 5

EP 1 519 204 B1

ΔEA

36    35    56

FIG. 6

76    ΔEA

Y

Z    X    36

35

56

FIG. 7

24

FIG. 8

EP 1 519 204 B1

FIG. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19543813 A1
- WO 0126183 A
- DE 10050278 A1
- DE 19922411 A1
- DE 4244608 C2
- DE 10025844 A1
- DE 4331440 A1
- DE 68913423 T2
- US 62154381 B
- DE 4228794 A1

**In der Beschreibung aufgeführte Nicht-Patentliteratur**

- **von M. Schneider et al.** Automotive 24GHz Short Range Radar(SRR) Sensors with Smart Antennas. *Proceedings des German Radar Symposium DRS,* 2002, 175-179
- **von R. Mende.** Radarsysteme zur automatischen Abstandsregelung in Automobilen. *Technische Universität Carolo-Wilhelmina zu Braunschweig,* 1999